# EUROPEAN PATENT APPLICATION

(11) **EP 4 806 743 A1**
(43) Date of publication of application: **16.09.2026**
(21) Application number: 24887639.3
(22) Date of filing: 18.09.2024
(51) Int. Cl.: B60W 30/06, B60W 60/00

(54) **PARKING CONTROL METHOD AND APPARATUS, VEHICLE, ELECTRONIC DEVICE, AND STORAGE MEDIUM**

(30) Priority: 07.11.2023 CN 202311479323
(71) Applicant: BYD Company Limited, Shenzhen, Guangdong 518118 (CN)
(72) Inventor: LI, Songbo, Shenzhen, Guangdong 518118 (CN); LI, Guanyuan, Shenzhen, Guangdong 518118 (CN); WANG, Gang, Shenzhen, Guangdong 518118 (CN); ZHAO, Chuang, Shenzhen, Guangdong 518118 (CN); TANG, Minxin, Shenzhen, Guangdong 518118 (CN)
(74) Representative: Mathys & Squire
(86) International application number: PCT/CN2024/119408
(87) International publication number: WO 2025/098021

(57) **Abstract**

A parking control method and apparatus, a vehicle, an electronic device, and a storage medium are provided. The parking control method includes: determining a target parking mode based on a size of parking space, where the target parking mode includes controlling a vehicle to rotate in place for parking or controlling a wheel of the vehicle to rotate to move the vehicle for parking; generating a parking path based on the target parking mode; and controlling the vehicle to park based on the parking path.

## Description

### CROSS-REFERENCE TO RELATED APPLICATIONS

This application claims priority to Chinese Patent Application NO. 202311479323.9, filed on November 7, 2023 and entitled "PARKING CONTROL METHOD AND APPARATUS, VEHICLE, ELECTRONIC DEVICE, AND STORAGE MEDIUM".

### TECHNICAL FIELD

The present invention relates to the field of automatic driving technologies, and in particular, to a parking control method and apparatus, a vehicle, an electronic device, and a storage medium.

### BACKGROUND

After reaching a destination, a vehicle usually needs to be parked in a parking spot. In related technologies, the vehicle may be parked in the parking spot by using an automatic parking technology. The automatic parking technology includes using a sensor such as a camera or an ultrasonic radar to obtain information about a surrounding parking spot and obstacle, performing path planning based on an identified parking spot, and releasing the parking spot if a path is successfully planned. Then, a user can select the parking spot and send an instruction to starting parking. In an existing automatic parking mode, steering of a wheel is usually controlled to implement steering and forward/backward movement of a vehicle for parking. The parking mode is not flexible enough, and parking efficiency is relatively low.

### SUMMARY

Implementations of the present invention aim to resolve one of technical problems in the related technologies at least to some extent. Therefore, an objective of the implementations of the present invention is to provide a parking control method and apparatus, a vehicle, an electronic device, and a storage medium.

An implementation of the present invention provides a parking control method, and the parking control method includes: determining a target parking mode based on a size of parking space, wherein the target parking mode includes controlling a vehicle to rotate in place for parking or controlling a wheel of the vehicle to rotate to move the vehicle for parking; generating a parking path based on the target parking mode; and controlling the vehicle to park based on the parking path.

An implementation of the present invention provides a parking control apparatus, and the parking control apparatus includes a determining module, a generation module, and a control module. The determining module is configured to determine a target parking mode based on a size of parking space, wherein the target parking mode includes controlling a vehicle to rotate in place for parking or controlling a wheel of the vehicle to rotate to move the vehicle for parking. The generation module is configured to generate a parking path based on the target parking mode. The control module is configured to control the vehicle to park based on the parking path.

An implementation of the present invention provides a vehicle, and the vehicle is configured to perform the steps of the parking control method.

An implementation of the present invention provides an electronic device, including a memory and a processor. The memory stores a computer program, and the computer program is executed by the processor to implement the steps of the method in any one of the foregoing implementations.

An implementation of the present invention provides a computer-readable storage medium, and the computer-readable storage medium stores a computer program. The computer program is executed by a processor to implement the steps of the method in any one of the foregoing implementations.

An implementation of the present invention provides a computer program product, and the computer program product includes instructions. When the instructions are executed by a processor of a computer device, the computer device is enabled to perform the steps of the method in any one of the foregoing implementations.

In the foregoing implementations of the present invention, the target parking mode is determined based on the size of the parking space, the parking path is generated based on the target parking mode, and the vehicle is controlled to park based on the parking path. The parking control method in the present invention effectively improves parking flexibility and efficiency.

### BRIEF DESCRIPTION OF DRAWINGS

FIG. 1 is a schematic flowchart of a parking control method according to an implementation of the present invention;
FIG. 2a to FIG. 2c are schematic diagrams of a size of parking space corresponding to a parking spot of a perpendicular entry type according to an implementation of the present invention;
FIG. 3 is a schematic diagram of a size of parking space corresponding to a parking spot of a parallel entry type according to an implementation of the present invention;
FIG. 4 is a schematic diagram of a width association relationship according to an implementation of the present invention;
FIG. 5 is a schematic diagram of determining a first width association relationship according to an implementation of the present invention;
FIG. 6 is a schematic diagram of determining a second width association relationship according to an implementation of the present invention;
FIG. 7 and FIG. 8 are schematic diagrams in which a vehicle rotates around a rotation center for parking according to an implementation of the present invention; and
FIG. 9 is a schematic diagram of a parking control apparatus according to an implementation of the present invention.

### DESCRIPTION OF EMBODIMENTS

The following describes in detail embodiments of the present invention, and examples of the embodiments are shown in the accompanying drawings. Same or similar reference numerals throughout the accompanying drawings indicate same or similar elements or elements having same or similar functions. The embodiments described below with reference to the accompanying drawings are examples, and are used to explain the present invention and shall not be construed as limitations on the present invention.

In an implementation, automatic parking may be performed based on an Ackermann steering model. A mode in which automatic parking is performed based on the Ackermann steering model is also referred to as a conventional parking mode. To be specific, steering and forward/backward movement of a vehicle are implemented by controlling steering of front wheels and co-directional rotation of four wheels of the vehicle. In this mode, relatively large operating space is required.

In another implementation, parking may be performed in an e⁴ parking mode. In the e⁴ parking mode, parking is performed by using an in-place steering capability of a vehicle. In-place steering includes that the vehicle rotates around a centroid of the vehicle, around a front axle center or a rear axle center of the vehicle, around a center of a single wheel, or the like. When parking is performed in the e⁴ parking mode, in-place steering needs to be considered based on the Ackermann steering model. Therefore, in the e⁴ parking mode, movement of the vehicle can be controlled for parking in an environment with a more stringent operating space condition, thereby improving adaptability and a parking success rate of an automatic parking system. In addition, in the e⁴ parking mode, the vehicle is controlled to steer in place to quickly adjust an attitude angle of the vehicle, which eliminates repeated forward and backward movement of the vehicle, thereby improving parking efficiency.

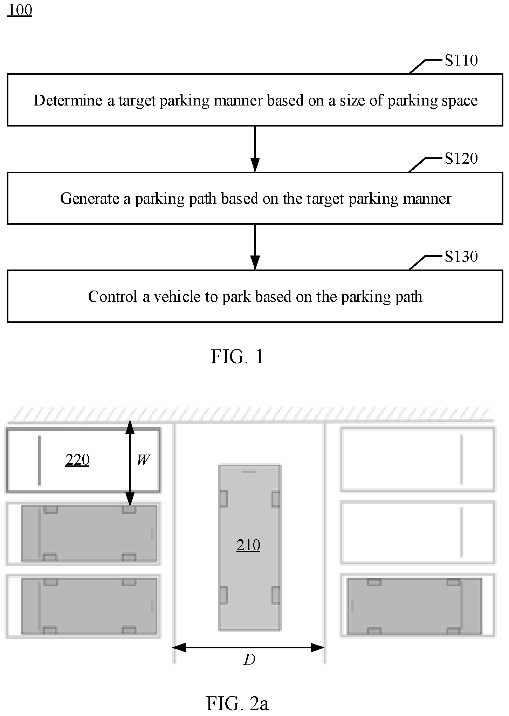

The present invention discloses a parking control method. For details, reference is made to following descriptions of FIG. 1 to FIG. 8.

FIG. 1 is a schematic flowchart of a parking control method according to an implementation of the present invention.

As shown in FIG. 1, a parking control method 100 provided in the implementation of the present invention includes, for example, steps S110 to S130.

Step S110: determine a target parking mode based on a size of parking space.

For example, the size of the parking space indicates whether operable space in a parking process is spacious or narrow. In the parking process, a vehicle may obtain the size of the parking space by collecting information about a surrounding environment in real time by using a sensor, and select, based on the size, a proper target parking mode for parking. The target parking mode includes, for example, controlling the vehicle to rotate in place for parking or controlling a wheel of the vehicle to rotate to move the vehicle for parking.

Step S120: generate a parking path based on the target parking mode.

After the target parking mode is determined, the vehicle generates the parking path based on the target parking mode. Parking in this embodiment of the present invention includes parking in and parking out. Parking in includes the vehicle traveling into a parking spot, and parking out includes the vehicle traveling out of a parking spot. In a case of parking in, the parking path indicates a path along which the vehicle travels from a current position to the parking spot. In a case of parking out, the parking path indicates a path along which the vehicle travels out of the parking spot.

Step S130: control a vehicle to park based on the parking path.

After the parking path is generated, the vehicle is controlled to travel into a parking spot along a path indicated by the parking path, or to travel out of the parking spot along the path indicated by the parking path.

It will be understood that, in this embodiment of the present invention, a proper target parking mode is determined based on the size of the parking space, and parking is performed in the target parking mode. A proper parking mode is selected based on operable space of an external environment, thereby improving parking flexibility and efficiency.

In another example, a first parking mode and a second parking mode are used as an example for description in the present invention. One of the first parking mode and the second parking mode is selected as the target parking mode based on the size of the parking space.

For example, the first parking mode includes controlling the vehicle to rotate in place for parking. The first parking mode includes, for example, an e⁴ parking mode. In-place rotation includes controlling the vehicle to rotate around a centroid of the vehicle, around a front axle center or a rear axle center of the vehicle, around a center of a single wheel, or the like.

For example, the second parking mode includes controlling a wheel of the vehicle to rotate to move the vehicle for parking. The second parking mode includes, for example, an automatic parking mode based on an Ackermann steering model, which is also referred to as a conventional parking mode. Forward and backward movement of the vehicle is implemented by controlling co-directional rotation of front wheels or co-directional rotation of four wheels of the vehicle.

Generally, a spatial size required for the first parking mode is smaller than a spatial size required for the second parking mode. Therefore, in a narrow environment, the first parking mode may be selected for parking. However, in the first parking mode, parking is performed through in-place rotation. In this case, a friction force between a wheel and the ground is relatively large, which causes specific frictional damage to the wheel. Therefore, in a spacious environment, the second parking mode may be preferentially selected for parking.

In an example, when the size of the parking space meets a preset size condition, the first parking mode is determined as the target parking mode. When the size of the parking space does not meet the preset size condition, the second parking mode is determined as the target parking mode.

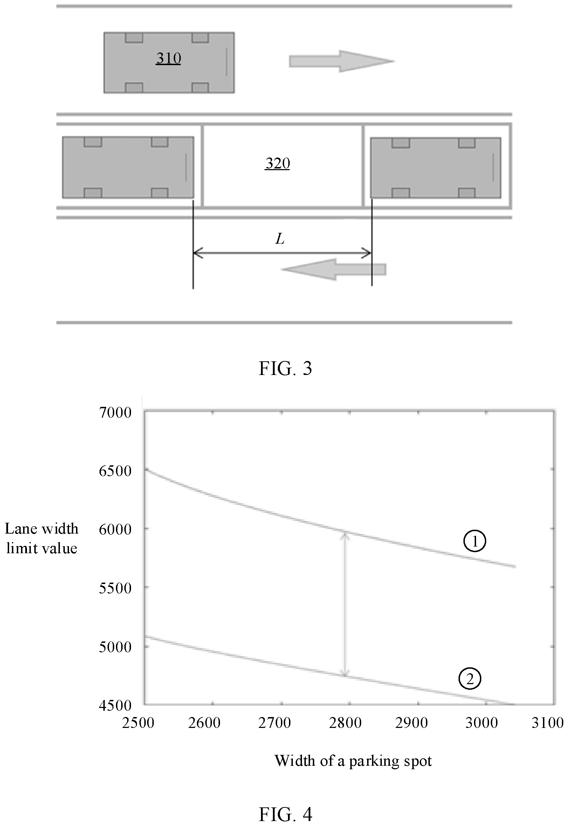

For example, the size of the parking space varies based on different types of the parking spot. FIG. 2a to FIG. 2c show the size of the parking space when a type of the parking spot is a perpendicular entry type. FIG. 3 shows the size of the parking space when a type of the parking spot is a parallel entry type.

FIG. 2a to FIG. 2c are schematic diagrams of a size of parking space corresponding to a parking spot of a perpendicular entry type according to an implementation of the present invention;

As shown in FIG. 2a to FIG. 2c, the type of the parking spot is the perpendicular entry type, that is, a parking spot 220 is a perpendicular parking spot. "Perpendicular" indicates that before a vehicle 210 enters the parking spot 220, a traveling direction of the vehicle 210 is perpendicular to a length direction of the parking spot 220. When the type of the parking spot is the perpendicular entry type, the size of the parking space includes a width *W* of the parking spot and a width *D* of a vehicle travel lane.

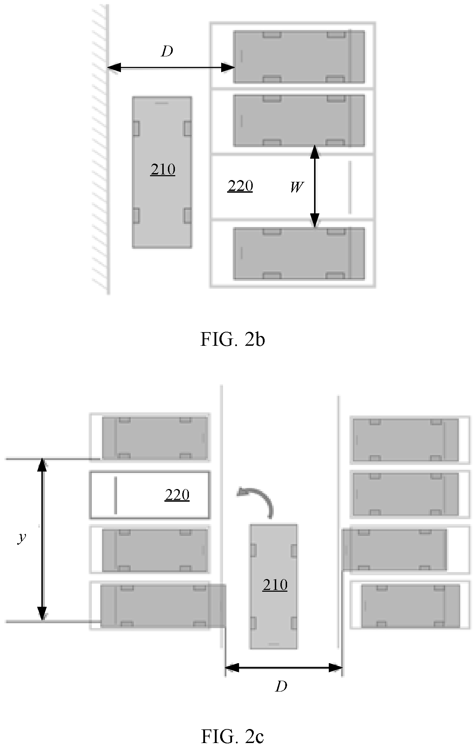

When the vehicle parks into the perpendicular parking spot, the width *W* of the parking spot and the width *D* of the vehicle travel lane need to be considered. As shown in FIG. 2a and FIG. 2b, the width *W* of the parking spot may refer to a width of available space of the parking spot, which is not equal to a width of a rectangle defined by parking spot lines. The width *D* of the vehicle travel lane may refer to a width of a travelable region outside the parking spot, which is not equal to a width of a region defined by lane lines. As shown in FIG. 2c, for a scenario in which the width *D* of the vehicle travel lane varies, for example, based on different positions of vehicles parked on both sides of the lane, the width *D* of the vehicle travel lane may refer to a lateral distance (minimum lateral distance) between two points that are on both sides of the lane and that are closest to the middle of the lane, within a longitudinal range of a distance *y* from an edge of the parking spot to a parking-in side of the vehicle, where *y* may be set to 1.5 times a length of the vehicle or may be set to another value based on a requirement.

FIG. 3 is a schematic diagram of a size of parking space corresponding to a parking spot of a parallel entry type according to an implementation of the present invention;

As shown in FIG. 3, the type of the parking spot is the parallel entry type, that is, a parking spot 320 is a parallel parking spot. "Parallel" indicates that before a vehicle 310 enters the parking spot 320, a traveling direction of the vehicle 310 is parallel to a length direction of the parking spot 320. When the type of the parking spot is the parallel entry type, the size of the parking space includes a length *L* of the parking spot.

It will be understood that different sizes of the parking space are set based on different types of parking spots. In this way, when the vehicle is parked into different types of parking spots, a proper parking mode can be determined based on a size of a corresponding parking space, thereby improving a parking effect.

In another example, the type of the parking spot includes a perpendicular entry type. When the size of the parking space meets a preset size condition, the first parking mode is determined as the target parking mode. The preset size condition includes a first size condition. The first size condition includes: the width *D* of the vehicle travel lane being less than a first lane width limit value *D*ₘᵢₙ₁. The first lane width limit value *D*ₘᵢₙ₁ is determined based on the width *W* of the parking spot and a first width association relationship, and the first width association relationship represents a relationship between the width *W* of the parking spot and the first lane width limit value *D*ₘᵢₙ₁. In other words, the first lane width limit value *D*ₘᵢₙ₁ can be determined based on the width *W* of the parking spot, and when the width *D* of the vehicle travel lane is less than the first lane width limit value *D*ₘᵢₙ₁, the first parking mode is determined as the target parking mode.

In another example, the preset size condition may further include a second size condition in addition to the first size condition. The second size condition includes: the width *D* of the vehicle travel lane being greater than a second lane width limit value *D*ₘᵢₙ₂. The second lane width limit value *D*ₘᵢₙ₂ is determined based on the width *W* of the parking spot and a second width association relationship, and the second width association relationship represents a relationship between the width *W* of the parking spot and the second lane width limit value *D*ₘᵢₙ₂. In other words, the second lane width limit value *D*ₘᵢₙ₂ can be determined based on the width *W* of the parking spot, and when the width *D* of the vehicle travel lane is less than the first lane width limit value *D*ₘᵢₙ₁ and greater than the second lane width limit value *D*ₘᵢₙ₂ (that is, *D*ₘᵢₙ₂ < *D* < *D*ₘᵢₙ₁), the first parking mode is determined as the target parking mode.

For example, the first lane width limit value *D*ₘᵢₙ₁ is greater than the second lane width limit value *D*ₘᵢₙ₂. If the width *D* of the vehicle travel lane is greater than or equal to the first lane width limit value *D*ₘᵢₙ₁, it indicates that the size of the parking space does not meet the preset size condition. In this case, the parking space is relatively large, and the second parking mode may be preferentially selected for parking. If the width *D* of the vehicle travel lane is less than the first lane width limit value *D*ₘᵢₙ₁ and greater than the second lane width limit value *D*ₘᵢₙ₂, it indicates that the size of the parking space meets the preset size condition. In this case, the parking space is relatively narrow, and the first parking mode may be preferentially selected for parking.

FIG. 4 is a schematic diagram of a width association relationship according to an implementation of the present invention.

As shown in FIG. 4, the first width association relationship includes a first relationship curve. The first relationship curve indicates a relationship between the width *W* of the parking spot and the first lane width limit value *D*ₘᵢₙ₁. After the width *W* of the parking spot into which a vehicle currently needs to park is obtained, the first lane width limit value *D*ₘᵢₙ₁ may be obtained through the first relationship curve. The unit shown in FIG. 4 is millimeter mm.

The second width association relationship includes a second relationship curve. The second relationship curve indicates a relationship between the width *W* of the parking spot and the second lane width limit value *D*ₘᵢₙ₂. After the width *W* of the parking spot into which a vehicle currently needs to park is obtained, the second lane width limit value *D*ₘᵢₙ₂ may be obtained through the second relationship curve.

A lane width required for parking in the first parking mode is less than a lane width required for parking in the second parking mode. As shown in FIG. 4, a first relationship curve ① indicates a relationship between a width of a parking spot and a minimum lane width when parking into the parking spot is completed in a single maneuver in the second parking mode. Parking a single maneuver means that there is no need to perform a plurality of back-and-forth adjustments. In other words, the vehicle does not need to travel back and forth. The back-and-forth adjustment means switching between a forward gear and a reverse gear. A second relationship curve ② indicates the relationship between the width of the parking spot and the minimum lane width when parking into the parking spot is completed in a single maneuver in the first parking mode. The second relationship curve ② is below the first relationship curve ①, which indicates that for a parking spot of the same width, parking in the first parking mode has a lower requirement on a lane width, and parking into the parking spot can be completed in a single maneuver in a narrower scenario.

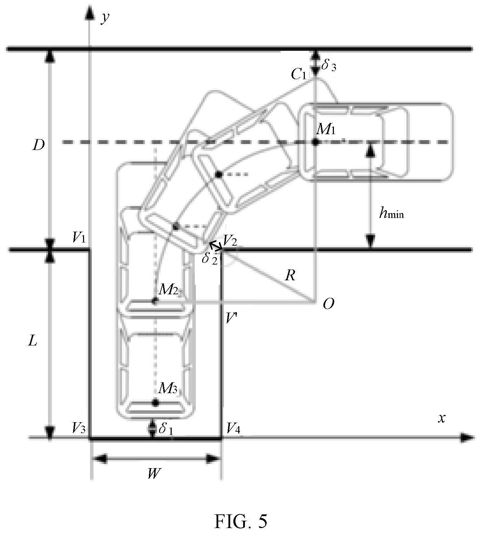

For example, if a relationship between the width *W* of the parking spot and the width *D* of the vehicle travel lane is above the first relationship curve, it indicates that the size of the parking space does not meet the preset size condition, meaning that the travel lane is spacious. In this case, the second parking mode is preferentially selected for parking. Therefore, the first width association relationship can be determined when the vehicle is parked in the second parking mode. For details of a process of determining the first width association relationship, reference is made to FIG. 5.

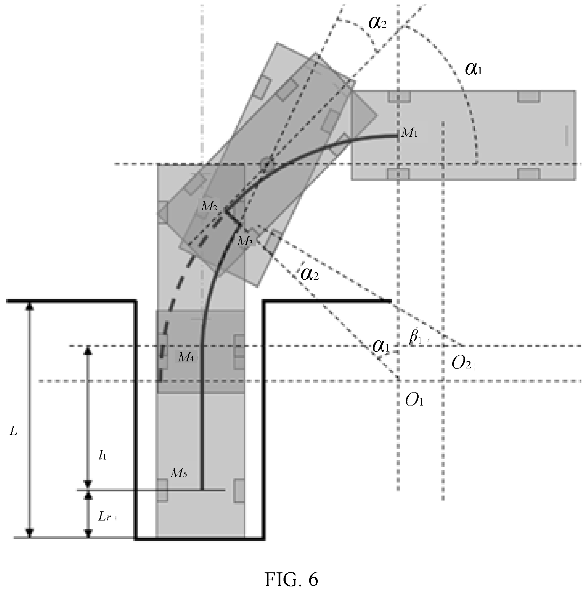

For example, if the relationship between the width *W* of the parking spot and the width *D* of the vehicle travel lane is below the first relationship curve and above the second relationship curve, it indicates that a special size meets the preset size condition, meaning that the travel lane is relatively narrow. In this case, the first parking mode may be selected for parking. Therefore, the second width association relationship can be determined when the vehicle is parked in the first parking mode. For details of a process of determining the second width association relationship, reference is made to FIG. 6.

FIG. 5 is a schematic diagram of determining a first width association relationship according to an implementation of the present invention.

As shown in FIG. 5, when parking is performed in the second parking mode, a parking path may include a C-shaped path or an inverted V-shaped path. In FIG. 5, the C-shaped path is used as an example for description. Corner points *V*₁, *V*₂, *V*₃, and *V*₄ represent a parking spot. *L* is a length of the parking spot, *W* is a width of the parking spot, and *D* is a lane width. *δ*₁, *δ*₂, and *δ*₃ each represent a reserved safety distance between the vehicle and an obstacle. A coordinate system is established with *V*₃ as a coordinate origin. *M*₁ is an initial parking position of the vehicle, at which a steering wheel of the vehicle is turned to a right limit position and the vehicle reverses backward. *M*₂ is a position at which the steering wheel is straightened and the vehicle reverses backward in a straight line. *M*₃ is a target parking position, at which parking is completed. *O* is a turning origin of the vehicle, *R* is a turning radius of the vehicle, and *V*' is an intersection point between the parking spot and a straight line from the turning origin *O* to *M*₂. To obtain a critical lateral distance *h*ₘᵢₙ, based on a reverse path planning principle, *M*₂ is set as an initial point at which the vehicle exactly travels out of the parking spot with a minimum turning radius *R*ₘᵢₙ (with the steering wheel at the right limit position), and requirements on obstacle avoidance and a reserved safety distance are satisfied. Based on a geometric relationship shown in FIG. 5, a required minimum lane width (that is, the first lane width limit value) *D*ₘᵢₙ₁ may be obtained as follows: $\begin{matrix}{D}_{min 1} = {Y}_{{M}_{2}} + {R}_{{C}_{1}} + {δ}_{3} - L \\ = - \sqrt{{\left({R}_{min}-\frac{{W}_{a}}{2}-{δ}_{1}\right)}^{2} - {\left({R}_{min}-\frac{W}{2}\right)}^{2}} + \sqrt{{\left({R}_{min}+\frac{{W}_{a}}{2}\right)}^{2} + {\left({L}_{a}-{L}_{r}\right)}^{2}} + {δ}_{3}\end{matrix}$ where *R*ₘᵢₙ is a minimum turning radius, *W*ₐ is a vehicle width, *L*ₐ is a vehicle length, *L*ᵣ is a rear overhang length of the vehicle, *δ*₁, *δ*₂, and *δ*₃ each are a reserved safety distance, *Y*_{*M*2} represents a distance from *M*₂ to an x-axis, *R*_{*C*1} represents a distance from *C*₁ to *M*₂, and *C*₁ represents an upper right corner of the vehicle, $\sqrt{{\left({R}_{min}-\frac{{W}_{a}}{2}-{δ}_{1}\right)}^{2} - {\left({R}_{min}-\frac{W}{2}\right)}^{2}} = L - {Y}_{M 2}$, and $\sqrt{{\left({R}_{min}+\frac{{W}_{a}}{2}\right)}^{2} + {\left({L}_{a}-{L}_{r}\right)}^{2}} = {R}_{C 1}$.

It will be understood that the first width association relationship (the relationship between the first lane width limit value *D*ₘᵢₙ₁ and the width *W* of the parking spot) is determined based on a size of the vehicle, travel data of the vehicle parking in the second parking mode, and a reserved safety distance. The size of the vehicle includes, for example, the vehicle width *W*ₐ, the vehicle length *L*ₐ, and the rear overhang length *L*ᵣ of the vehicle. The travel data of the vehicle parking in the second parking mode includes, for example, the minimum turning radius *R*ₘᵢₙ. The reserved safety distance includes, for example, *δ*₁ or *δ*₃.

FIG. 6 is a schematic diagram of determining a second width association relationship according to an implementation of the present invention.

Similar to the process of determining the first width association relationship, with reference to FIG. 5 and FIG. 6, a minimum lane width *D*ₘᵢₙ₂ required for parking in the first parking mode (that is, the second lane width limit value) is obtained as follows: ${D}_{min 2} = {L}_{r} + {l}_{1} + {R}_{min} {sinβ}_{1} + \frac{{h}_{m}}{2} {cosβ}_{1} + \frac{\sqrt{{{L}_{a}}^{2} + {{W}_{a}}^{2}}}{2} - L$ where ${\left(L-{l}_{1}-{L}_{r}\right)}^{2} + {\left({R}_{min}-\frac{W}{2}\right)}^{2} = {\left({R}_{min}-\frac{{W}_{a}}{2}\right)}^{2}$ ${\left[\frac{W}{2}+{R}_{min}-{R}_{min}{cosβ}_{1}+\frac{{h}_{m}}{2}cos\left({α}_{1}+{α}_{2}\right)\right]}^{2} + {\left[{L}_{r}+{l}_{1}+{R}_{min} {sinβ}_{1}+\frac{{h}_{m}}{2}sin\left({α}_{1}+{α}_{2}\right)-L\right]}^{2} = \frac{{{L}_{a}}^{2} + {{W}_{a}}^{2}}{4}$ where *h*ₘ is a wheelbase of the vehicle, *β*₁ is a steering angle of an arc segment *M*₃~*M*₄, *α*₁ is a steering angle of an arc segment *M*₁~*M*₂, *α*₂ is an in-place steering angle of *M*₂~*M*₃, and *l*₁ is a length of a straight-line segment *M*₄~*M*₅.

It will be understood that the second width association relationship is determined based on at least a size of the vehicle and travel data of the vehicle parking in the first parking mode. The size of the vehicle includes, for example, the wheelbase *h*ₘ of the vehicle. The travel data of the vehicle parking in the first parking mode includes, for example, the steering angle *β*₁, the steering angles *α*₁ and *α*₂, and the length *l*₁ of the straight-line segment. In addition to being determined based on the size of the vehicle and the travel data of the vehicle parking in the first parking mode, the second width association relationship may alternatively be determined based on another parameter used in formulas (2) to (4).

As shown in FIG. 6, when parking is performed in the first parking mode, during the arc segment *M*₁~*M*₂, the steering wheel is adjusted to perform arc vehicle reversing; during the arc segment *M*₂~*M*₃, the vehicle steers in place around a centroid; and during the segment *M*₃~*M*₅, the steering wheel is adjusted to perform vehicle reversing to park into the parking spot.

It will be understood from the formula (1) that when parking is performed in the second parking mode, there is a functional relationship between a minimum lane width *D*ₘᵢₙ₁ for parking in a single maneuver and the width *W* of the parking spot. When the width *W* of the parking spot is within a specific range, for example, 2500 mm to 3100 mm, the functional relationship is shown as a curve in FIG. 4. It will be understood from the formulas (2) to (4) that when parking is performed in the first parking mode, there is a functional relationship between a minimum lane width *D*ₘᵢₙ₂ for parking in a single maneuver and the width *W* of the parking spot. When the width *W* of the parking spot is within a specific range, for example, 2500 mm to 3100 mm, the functional relationship is shown as a curve in FIG. 4.

Curves in FIG. 4 are curves for parking in a single maneuver. Similar to the curves in FIG. 4, curves similar to the curves in FIG. 4 can be obtained by comparing a lane width required for the first parking mode and a lane width required for performing a plurality of back-and-forth adjustments (for example, four back-and-forth adjustments) in the second parking mode. The quantity of back-and-forth adjustments includes a quantity of switches between a forward gear and a reverse gear during parking in the second parking mode. Quantities of back-and-forth adjustments required for parking in the second parking mode under different lane widths may be obtained through algorithm simulation. Details are not described herein.

In another example, the type of the parking spot includes the parallel entry type. When the size of the parking space meets the preset size condition, the first parking mode is determined as the target parking mode. The size of the parking space includes a length ratio between a length of the parking spot and a length of the vehicle. The preset size condition includes: the length ratio being less than a preset ratio. In an example, the preset ratio may be 1.23 or another value set based on a requirement. When the length ratio is less than the preset ratio, it indicates that a length of a parking spot located on a side of the vehicle is relatively small and parking space is narrow. In this case, it may be determined that parking is to be performed in the first parking mode.

In the embodiment mentioned above, if the size of the parking space meets the preset size condition, it may be directly determined that parking is to be performed in the first parking mode.

In another embodiment, when the size of the parking space meets the preset size condition (for example, the relationship between the width *W* of the parking spot and the width *D* of the vehicle travel lane is below the first relationship curve and above the second relationship curve), cost data for parking in the second parking mode may be further determined. Then, the first parking mode is determined as the target parking mode only when the cost data indicates that a parking cost meets a preset cost condition. The cost data for parking in the second parking mode meeting the preset cost condition indicates that a cost for parking in the second parking mode is relatively high. In this case, parking in the second parking mode is improper, and the first parking mode needs to be selected for parking.

In an example, the cost data includes a quantity of back-and-forth adjustments, and the preset cost condition includes the quantity of back-and-forth adjustments being greater than a preset quantity. The quantity of back-and-forth adjustments includes a quantity of switches between a forward gear and a reverse gear during parking in the second parking mode. The preset quantity is, for example, 4 or another value set based on an actual requirement. If the quantity of back-and-forth adjustments for parking in the second parking mode is greater than the preset quantity, it indicates that current parking space is relatively narrow, and a plurality of back-and-forth adjustments are required to complete parking, resulting in low parking efficiency. In this case, the first parking mode is selected for parking to improve parking efficiency.

In another example, the cost data includes parking duration, and the preset cost condition includes parking duration for parking in the second parking mode being greater than a preset duration threshold, or parking duration for parking in the second parking mode being greater than parking duration for parking in the first parking mode. The preset duration threshold may be 50 seconds or another specified value. It will be understood that if the duration for parking in the second parking mode is relatively long, it indicates that parking efficiency is relatively low. In this case, the first parking mode may be selected for parking to improve parking efficiency.

In an example, in a process of determining a parking mode, the vehicle may interact with a user, so as to select the target parking mode based on a requirement of the user. For example, the first parking mode is recommended to the user based on the size of the parking space, and the user may determine, based on an actual situation, whether to perform parking in the first parking mode. If an instruction indicating that the user selects the second parking mode is received, it indicates that the user currently needs to select the second parking mode to perform parking. In this case, the second parking mode is used as the target parking mode. If the user does not perform selection, the recommended first parking mode may be used as the target parking mode by default. It will be understood that in a process of recommending the parking mode, a final target parking mode is determined through interaction with the user, which improves parking flexibility and enables the parking mode to better meet the requirement of the user.

In another example, when the first parking mode is recommended, prompt information may also be output simultaneously. The prompt information includes the cost data for parking in the second parking mode. The prompt information is output to help the user determine, based on the cost data, whether to select the first parking mode or the second parking mode. It will be understood that the cost data for the second parking mode may be output when the first parking mode is recommended, which helps the user perform selection to improve parking intelligence.

In another example, when the target parking mode is the first parking mode, a rotation center of the vehicle used when parking is performed in the first parking mode may be determined based on information about a relative position between the parking spot and an obstacle, and the parking path is generated based on the rotation center. The vehicle is then controlled to rotate around the rotation center based on the parking path to complete parking. The obstacle includes, for example, a curb, a wall, a pillar, another vehicle, or the like around the parking spot.

For example, the rotation center includes a centroid of the vehicle, a center point of an axle of the vehicle, a center point of a wheel of the vehicle, or the like.

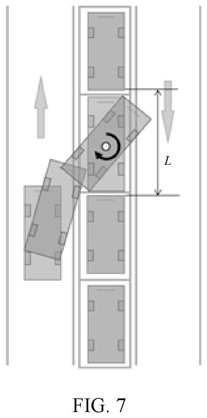

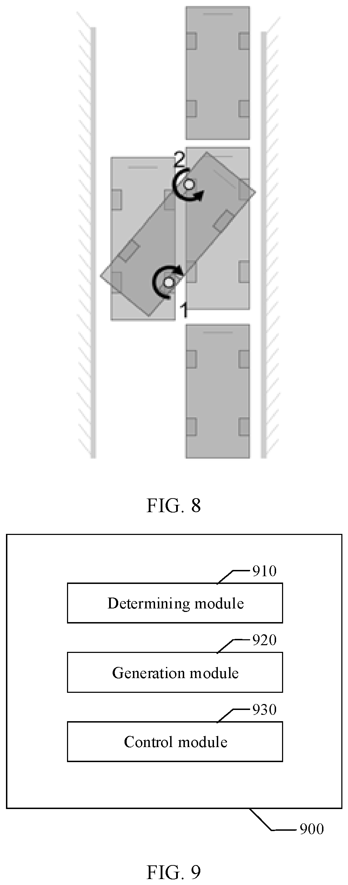

FIG. 7 and FIG. 8 are schematic diagrams in which a vehicle rotates around a rotation center for parking according to an implementation of the present invention.

FIG. 7 shows that when the parking spot is a parallel parking spot, the rotation center used when parking is performed in the first parking mode is the centroid of the vehicle. When the rotation center is the centroid of the vehicle, space required for parking is relatively large, and therefore a relative distance between the parking spot and the obstacle is relatively large. For example, when there is no obstacle (for example, a wall) on both sides of the parallel parking spot, the vehicle may be controlled, in the first parking mode, to first travel obliquely into the parking spot until the centroid of the vehicle substantially coincides with a longitudinal central axis of the parking spot, and then the vehicle steers in place around the centroid to complete parking in. Parking out mode is similar to the parking in mode. When parking out of the parking spot, the vehicle first steers in place around the centroid until a front of the vehicle faces out of the parking spot, and then travels out of the parking spot.

FIG. 8 shows that when the parking spot is a parallel parking spot, the rotation center used when parking is performed in the first parking mode is the center point of the wheel of the vehicle. For example, the vehicle first rotates clockwise with a wheel center 1 (a center of a right rear wheel) as the rotation center, and then rotates counterclockwise with a wheel center 2 (a center of a left front wheel) as the rotation center. When the rotation center is the center point of the wheel, space required for parking is relatively small, and therefore a relative distance between the parking spot and the obstacle is relatively small. For example, when there is an obstacle (for example, a wall) on one side of the parking spot, and the vehicle cannot be parked into the parking spot with the centroid of the vehicle as the rotation center, the vehicle is controlled, in the first parking mode, to travel to a position at which the vehicle substantially flushes with the parking spot, and then the vehicle sequentially rotates around a right rear wheel and a left front wheel to laterally move into the parking spot. A parking out mode is similar to the parking in mode. When parking out of the parking spot, the vehicle sequentially rotates around the left front wheel and the right rear wheel to laterally move out of the parking spot.

When the parking spot is a perpendicular parking spot, in a process of performing parking in the first parking mode, to reduce frictional damage to a wheel of the vehicle, the centroid of the vehicle is preferentially selected as the rotation center for parking. When there is an obstacle around the perpendicular parking spot, and the vehicle needs to change a traveling direction on a travel lane for successfully parking, to avoid low parking efficiency caused when the vehicle makes a U-turn to change the direction, the center point of the axle of the vehicle or the center point of the wheel of the vehicle may be selected as the rotation center for parking.

In an example, when the rotation center is the centroid of the vehicle, the center point of the axle of the vehicle, and the center point of the wheel of the vehicle, the relative distance between the parking spot and the obstacle decreases sequentially.

In another example, when parking is performed with the centroid of the vehicle as the rotation center, a degree of frictional damage to all wheels of the vehicle is relatively uniform. When parking is performed with the center point of the axle of the vehicle as the rotation center, a degree of frictional damage to some wheels is relatively large. When parking is performed with a center of a specific wheel of the vehicle as the rotation center, a degree of frictional damage to the wheel is larger. Therefore, when the relative distance between the parking spot and the obstacle is sufficient, the centroid of the vehicle is preferentially selected as the rotation center for parking, then the center point of the axle of the vehicle is selected as the rotation center for parking, and finally the center point of the wheel of the vehicle is selected as the rotation center for parking, so as to reduce a degree of frictional damage to some wheels.

In another example, in a process of controlling the vehicle to park based on the parking path, surrounding environmental data may be collected in real time, and the size of the parking space may be updated in real time, and then the target parking mode is updated based on an updated size. For example, in a process in which the vehicle travels out of the parking spot, it may be difficult to collect a complete size of the parking space initially due to obstruction by the obstacle. Initially, an initial target parking mode may be determined based on a currently collected spatial size and parking out is performed, or parking out may be performed directly in the second parking mode initially. In a parking out process, a more specific or complete size of the parking space is collected in real time, and the parking mode is updated at any time, thereby improving parking flexibility.

For example, in a process of parking out a perpendicular parking spot, when parked in the parking spot, the vehicle may be unable to perceive spatial information outside the parking spot. When parking out, the vehicle first parks out in the second parking mode. After the vehicle travels out of the parking spot by a part of a vehicle body, when perceiving that a relationship between a lane width outside the parking spot and the width of the parking spot is between the curve ① and the curve ② in FIG. 4, the vehicle may perform parking path planning again, and switch to parking out of the parking spot in the first parking mode.

It will be understood that in embodiments of the present invention, a sensor is used to obtain parking space information, and it is determined, based on the parking space information, whether to perform parking in the first parking mode, thereby properly applying an in-place steering capability of the vehicle, triggering the first parking mode in a proper scenario, and avoiding unnecessary tire wear.

In a case of parking into a parking spot, the parking space information may include elements such as a width of the parking spot, a length of the parking spot, a lane width outside the parking spot, and the like. When these elements meet specific conditions, the parking spot is marked as a parking spot suitable for the first parking mode, and parking is performed in the first parking mode.

In a case of parking out of a parking spot, the parking space information may include a distance between the vehicle and a front/rear obstacle, a distance between the vehicle and a side obstacle, and the like. When these elements meet specific conditions, the parking spot is marked as a parking spot suitable for the first parking mode, and parking is performed in the first parking mode. Alternatively, at an initial stage of parking out, the vehicle parks out of the parking spot in the second parking mode. In the parking out process, when the vehicle obtains richer spatial information (for example, the lane width outside the parking spot), it is determined, based on the rich spatial information, that the parking spot is marked as a parking spot suitable for the first parking mode, and the parking path is planned again in the first parking mode.

When parking is performed in the first parking mode, it is determined, based on the type of the parking spot, a positional relationship between the vehicle and the parking spot, a position of the obstacle, and the like, whether the vehicle rotates around the centroid, a center of a front/rear axle of the vehicle, or a single wheel. The parking path is planned in different modes for different types of parking spots, thereby improving parking flexibility.

For a specific parking spot, when a parking path can be planned in both the second parking mode and the first parking mode, a quantity of back-and-forth adjustments required for the second parking mode is analyzed. If the quantity of back-and-forth adjustments is greater than a specific threshold (for example, four back-and-forth adjustments), parking in is performed in the first parking mode; or if the quantity of back-and-forth adjustments is less than or equal to a specific threshold (for example, four back-and-forth adjustments), parking in is performed in the second parking mode. Alternatively, parking time is estimated. If parking time for parking in the second parking mode is greater than a specific threshold (for example, 50s), parking is performed in the first parking mode; or if the parking time for parking in the second parking mode is less than or equal to a specific threshold (for example, 50s), parking is performed in the second parking mode. Alternatively, parking time of the two parking modes is compared, and a mode with shorter parking time is selected to improve parking efficiency.

An implementation of the present invention provides a vehicle. The vehicle includes a data collection device such as a camera or an ultrasonic radar, and an in-vehicle terminal. The data collection device is mounted on a vehicle body of the vehicle. The data collection device is configured to collect a size of parking space. The in-vehicle terminal has a data processing function, and is configured to perform the parking control method mentioned above. Details are not described herein again.

FIG. 9 is a schematic diagram of a parking control apparatus according to an implementation of the present invention.

As shown in FIG. 9, an implementation of the present invention provides a parking control apparatus 900. The parking control apparatus 900 includes a determining module 910, a generation module 920, and a control module 930.

For example, the determining module 910 is configured to determine a target parking mode based on a size of parking space. The target parking mode includes controlling a vehicle to rotate in place for parking or controlling a wheel of the vehicle to rotate to move the vehicle for parking.

For example, the generation module 920 is configured to generate a parking path based on the target parking mode.

For example, the control module 930 is configured to control the vehicle to park based on the parking path.

For example, the determining module 910 is further configured to determine a first parking mode as the target parking mode when the size of the parking space meets a preset size condition. The first parking mode includes controlling the vehicle to rotate in place for parking.

For example, a type of a parking spot includes a perpendicular entry type, the size of the parking space includes a width of the parking spot and a width of a vehicle travel lane, and the preset size condition includes a first size condition. The first size condition includes: the width of the vehicle travel lane being less than a first lane width limit value. The first lane width limit value is determined based on the width of the parking spot and a first width association relationship, and the first width association relationship represents a relationship between the width of the parking spot and the first lane width limit value.

For example, the first width association relationship is determined based on a size of the vehicle, travel data of the vehicle parking in a second parking mode, and a reserved safety distance. The second parking mode includes controlling the wheel of the vehicle to rotate to move the vehicle for parking.

For example, the preset size condition further includes a second size condition. The second size condition includes: the width of the vehicle travel lane being greater than a second lane width limit value. The second lane width limit value is determined based on the width of the parking spot and a second width association relationship, and the second width association relationship represents a relationship between the width of the parking spot and the second lane width limit value.

For example, the second width association relationship is determined based on the size of the vehicle and travel data of the vehicle parking in the first parking mode.

For example, the type of the parking spot includes a parallel entry type, and the size of the parking space includes a length ratio between a length of the parking spot and a length of the vehicle. The preset size condition includes: the length ratio being less than a preset ratio.

For example, the determining module 910 is further configured to determine the second parking mode as the target parking mode when the size of the parking space does not meet the preset size condition.

For example, the determining module 910 is further configured to: when the size of the parking space meets the preset size condition, determine cost data for parking in the second parking mode; and determine the first parking mode as the target parking mode when the cost data indicates that a parking cost meets a preset cost condition.

For example, the cost data includes a quantity of back-and-forth adjustments, and the preset cost condition includes the quantity of back-and-forth adjustments being greater than a preset quantity.

For example, the cost data includes parking duration, and the preset cost condition includes at least one of the following: parking duration for parking in the second parking mode is greater than a preset duration threshold; or parking duration for parking in the second parking mode is greater than parking duration for parking in the first parking mode.

For example, the parking control apparatus 900 further includes another determining module, configured to determine the second parking mode as the target parking mode when the cost data indicates that the parking cost does not meet the preset cost condition.

For example, the generation module 920 is further configured to: when the target parking mode is the first parking mode, determine, based on information about a relative position between the parking spot and an obstacle, a rotation center of the vehicle used when parking is performed in the first parking mode; and generate a parking path based on the rotation center.

For example, the rotation center includes at least one of the following: a centroid of the vehicle, a center point of an axle of the vehicle, or a center point of a wheel of the vehicle.

For example, the parking control apparatus further includes a first updating module and a second updating module. The first updating module is configured to update the size of the parking space in a process of controlling the vehicle to perform parking based on the parking path. The second updating module is configured to update the target parking mode based on an updated size.

For example, the determining module 910 is further configured to recommend the first parking mode based on the size of the parking space; and use the second parking mode as the target parking mode when an instruction indicating that a user selects the second parking mode is received.

For example, the parking control apparatus 900 further includes: an output module, configured to: when the first parking mode is recommended, output the cost data for parking in the second parking mode, so that the user determines, based on the cost data, whether to select the first parking mode or the second parking mode.

It will be understood that for a specific description of the parking control apparatus 900, refer to the foregoing description of the parking control method. Details are not described herein again.

An implementation of the present invention provides an electronic device, including a memory and a processor. The memory stores a computer program, and the computer program is executed by the processor to implement the steps of the method in any one of the foregoing implementations.

An implementation of the present invention provides a computer-readable storage medium, and the computer-readable storage medium stores a computer program. The computer program is executed by a processor to implement the steps of the method in any one of the foregoing implementations.

An implementation of the present invention provides a computer program product, and the computer program product includes instructions. When the instructions are executed by a processor of a computer device, the computer device is enabled to perform the steps of the method in any one of the foregoing implementations.

It will be noted that the logic and/or steps represented in the flowchart or described herein in another mode, for example, may be considered as an ordered list of executable instructions for implementing logical functions, and may be specifically implemented in any computer-readable medium, for use by an instruction execution system, apparatus, or device (for example, a computer-based system, a system including a processor, or another system that can fetch instructions from an instruction execution system, apparatus, or device and execute the instructions), or use in combination with the instruction execution system, apparatus, or device. In terms of the present invention, the "computer-readable medium" may be any apparatus that may include, store, communicate, propagate, or transmit a program for use by an instruction execution system, apparatus, or device or in combination with the instruction execution system, apparatus, or device. More specific examples (a non-exhaustive list) of the computer-readable medium include the following: an electrical connection part (electronic apparatus) having one or more cables, a portable computer disc box (magnetic apparatus), a random access memory (RAM), a read-only memory (ROM), an erasable programmable read-only memory (EPROM or a flash memory), an optical fiber apparatus, and a compact disc read-only memory (CDROM). In addition, the computer-readable medium may even be a paper or another proper medium on which the program can be printed, since the program may be electronically obtained, for example, by optically scanning the paper or another medium and then performing editing, interpreting, or processing in another proper mode if necessary, and then the program is stored in a computer memory.

It will be understood that various parts of the present invention may be implemented by hardware, software, firmware, or a combination thereof. In the foregoing implementations, the plurality of steps or methods may be implemented by software or firmware stored in a memory and executed by a proper instruction execution system. For example, if the plurality of steps or methods are implemented by hardware, as in another implementation, the plurality of steps or methods may be implemented by using any one or a combination of the following technologies well-known in the art: a discrete logic circuit having a logic gate circuit for implementing a logical function for a data signal, an application-specific integrated circuit having a proper combined logic gate circuit, a programmable gate array (PGA), a field programmable gate array (FPGA), and the like.

In the description of the present invention, descriptions referring to the terms "one embodiment", "some embodiments", "examples", "specific examples", or "some examples" mean that specific features, structures, materials, or characteristics described with reference to this embodiment or example are included in at least one embodiment or example of the present invention. In the present invention, illustrative expressions of the foregoing terms do not necessarily refer to a same embodiment or example. Furthermore, the described specific features, structures, materials, or characteristics may be combined in any one or more embodiments or examples in a proper mode.

In the description of the present invention, it will be understood that the orientations or positional relationships indicated by the terms "center", "longitudinal", "lateral", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like, are based on orientation or positional relationships shown in the accompanying drawings, and are only for ease of describing the present invention and simplifying the descriptions, rather than indicating or implying that an indicated apparatus or element needs to have a specific orientation or be constructed and operated in a specific orientation, and therefore will not be understood as a limitation on the present invention.

In addition, the terms such as "first" and "second" used in the embodiments of the present invention are used for a descriptive purpose only and will not be construed as indicating or implying relative importance or implicitly indicating a quantity of technical features indicated in the embodiments. Therefore, features defined with terms such as "first" and "second" in the embodiments of the present invention may explicitly or implicitly indicate that the embodiments include at least one feature. In the description of the present invention, the expression "a plurality of" means at least two or two or more, for example, two, three, four, or the like, unless otherwise clearly and specifically limited in the embodiments.

In the present invention, unless otherwise clearly specified or limited in the embodiments, terms such as "mounted", "connected", "connection", and "fixed" that appear in the embodiments will be understood in a broad sense. For example, the connection may be a fixed connection, or may be a detachable connection or an integrated connection. It will be understood that the connection may be a mechanical connection, an electrical connection, or the like; and certainly, may alternatively be a direct connection or an indirect connection through an intermediate medium, or may be internal communication between two elements or an interaction relationship between two elements. For a person of ordinary skill in the art, specific meanings of the foregoing terms in the present invention will be understood based on a specific implementation situation.

In the present invention, unless otherwise explicitly specified and defined, that a first feature is "above" or "below" a second feature may be that the first feature and the second feature are in direct contact, or the first feature and the second feature are in indirect contact through an intermediate medium. In addition, that the first feature is "on", "above", and "over" the second feature may be that the first feature is directly above or obliquely above the second feature, or merely indicates that a horizontal height of the first feature is higher than that of the second feature. That the first feature is "under", "below", or "beneath" the second feature may be that the first feature is directly below or obliquely below the second feature, or merely indicates that a horizontal height of the first feature is lower than that of the second feature.

Although the embodiments of the present invention have been shown and described above, it will be understood that the foregoing embodiments are examples and cannot be construed as limitations on the present invention, and a person of ordinary skill in the art can make changes, modifications, substitutions, or variations on the foregoing embodiments within the scope of the present invention.

## Claims

1. A parking control method, wherein the parking control method comprises:
determining a target parking mode based on a size of parking space, wherein the target parking mode comprises controlling a vehicle to rotate in place for parking or controlling a wheel of the vehicle to rotate to move the vehicle for parking;
generating a parking path based on the target parking mode; and
controlling the vehicle to park based on the parking path.

2. The parking control method according to claim 1, wherein determining the target parking mode based on the size of parking space comprises:
determining a first parking mode as the target parking mode when the size of the parking space meets a preset size condition, wherein the first parking mode comprises controlling the vehicle to rotate in place for parking.

3. The parking control method according to claim 2, wherein a type of a parking spot comprises a perpendicular entry type, the size of the parking space comprises a width of the parking spot and a width of a vehicle travel lane, and the preset size condition comprises a first size condition; and
the first size condition comprises: the width of the vehicle travel lane being less than a first lane width limit value, the first lane width limit value being determined based on the width of the parking spot and a first width association relationship, and the first width association relationship representing a relationship between the width of the parking spot and the first lane width limit value.

4. The parking control method according to claim 3, wherein the first width association relationship is determined based on a size of the vehicle, travel data of the vehicle parking in a second parking mode, and a reserved safety distance, and the second parking mode comprises controlling the wheel of the vehicle to rotate to move the vehicle for parking.

5. The parking control method according to claim 3 or 4, wherein the preset size condition further comprises a second size condition; and
the second size condition comprises: the width of the vehicle travel lane being greater than a second lane width limit value, the second lane width limit value being determined based on the width of the parking spot and a second width association relationship, and the second width association relationship representing a relationship between the width of the parking spot and the second lane width limit value.

6. The parking control method according to claim 5, wherein the second width association relationship is determined based on the size of the vehicle and travel data of the vehicle parking in the first parking mode.

7. The parking control method according to any one of claims 2 to 6, wherein the type of the parking spot comprises a parallel entry type, and the size of the parking space comprises a length ratio between a length of the parking spot and a length of the vehicle; and
the preset size condition comprises: the length ratio being less than a preset ratio.

8. The parking control method according to any one of claims 2 to 7, wherein determining the target parking mode based on the size of parking space comprises:
determining the second parking mode as the target parking mode when the size of the parking space does not meet the preset size condition.

9. The parking control method according to any one of claims 1 to 8, wherein determining the target parking mode based on the size of parking space comprises:
when the size of the parking space meets the preset size condition, determining cost data for parking in the second parking mode; and
determining the first parking mode as the target parking mode when the cost data indicates that a parking cost meets a preset cost condition.

10. The parking control method according to claim 9, wherein the cost data comprises a quantity of back-and-forth adjustments, and the preset cost condition comprises the quantity of back-and-forth adjustments being greater than a preset quantity.

11. The parking control method according to claim 9 or 10, wherein the cost data comprises parking duration, and the preset cost condition comprises at least one of the following:
parking duration for parking in the second parking mode is greater than a preset duration threshold; or
parking duration for parking in the second parking mode is greater than parking duration for parking in the first parking mode.

12. The parking control method according to any one of claims 9 to 11, further comprising:
determining the second parking mode as the target parking mode when the cost data indicates that the parking cost does not meet the preset cost condition.

13. The parking control method according to any one of claims 2 to 8, wherein the target parking mode is the first parking mode, and the generating a parking path based on the target parking mode comprises:
determining, based on information about a relative position between the parking spot and an obstacle, a rotation center of the vehicle used when parking is performed in the first parking mode; and
generating the parking path based on the rotation center.

14. The parking control method according to claim 13, wherein the rotation center comprises at least one of the following:
a centroid of the vehicle, a center point of an axle of the vehicle, or a center point of a wheel of the vehicle.

15. The parking control method according to any one of claims 1 to 11, wherein the parking control method further comprises:
updating the size of the parking space in a process of controlling the vehicle to park based on the parking path; and
updating the target parking mode based on an updated size.

16. The parking control method according to any one of claims 1 to 11, wherein determining the target parking mode based on the size of parking space comprises:
recommending the first parking mode based on the size of the parking space; and
using the second parking mode as the target parking mode when an instruction indicating that a user selects the second parking mode is received.

17. The parking control method according to claim 16, further comprising:
when the first parking mode is recommended, outputting the cost data for parking in the second parking mode, so that the user determines, based on the cost data, whether to select the first parking mode or the second parking mode.

18. A parking control apparatus, wherein the parking control apparatus comprises:
a determining module, configured to determine a target parking mode based on a size of parking space, wherein the target parking mode comprises controlling a vehicle to rotate in place for parking or controlling a wheel of the vehicle to rotate to move the vehicle for parking;
a generation module, configured to generate a parking path based on the target parking mode; and
a control module, configured to control the vehicle to park based on the parking path.

19. A vehicle, wherein the vehicle is configured to perform the steps of the method according to any one of claims 1 to 17.

20. An electronic device, comprising a memory and a processor, the memory storing a computer program, wherein the computer program is executed by the processor to implement the steps of the method according to any one of claims 1 to 17.

21. A computer-readable storage medium, wherein the computer-readable storage medium stores a computer program, and the computer program is executed by a processor to implement the steps of the method according to any one of claims 1 to 17.
